# EUROPÄISCHE PATENTSCHRIFT

(11) **EP 0 504 336 B1**
(45) Veröffentlichungstag und Bekanntmachung des Hinweises auf die Patenterteilung: **13.07.1994**
(21) Anmeldenummer: 91915118.3
(22) Anmeldetag: 04.09.1991
(51) Int. Cl.: G01D 5/249, G01D 5/244, G01D 5/36

(54) **VERFAHREN ZUM MESSEN VON LÄNGEN**
METHOD OF MEASURING LENGTHS
PROCEDE DE MESURE DE LONGUEURS

(30) Priorität: 07.09.1990 DD 343883
(43) Veröffentlichungstag der Anmeldung: 23.09.1992
(73) Patentinhaber: CARL ZEISS JENA GmbH, 07745 Jena (DE)
(72) Erfinder: SCHUCHARDT, Gerd, O-6900 Jena (DE); FREITAG, Hans-Joachim, O-6900 Jena (DE)
(74) Vertreter: Geyer, Werner, Dr.-Ing.
(86) Internationale Anmeldenummer: EP9101674
(87) Internationale Veröffentlichungsnummer: WO9204598

(56) Entgegenhaltungen:
- EP-A- 0 118 673
- EP-A- 0 126 211
- EP-A- 0 246 404
- DE-A- 3 102 125
- US-A- 3 982 106

## Beschreibung

### Technisches Gebiet

Die Erfindung bezieht sich auf ein Verfahren zum Messen von Längen, bei dem ein Teilungsträger, der eine Rasterteilung mit einer Zählspur und Referenzmarken mit unterschiedlichen Abständen in mindestens einer anderen Spur aufweist, von einer Abtasteinrichtung abgetastet wird, wobei die Abtastsignale in einer Auswerteinrichtung und einer Anzeigeeinrichtung weiterverarbeitet werden, und bei dem die unterschiedlichen Abstände der Referenzmarken zueinander durch Abtasten der Rasterteilung in Zähleinheiten der Zählspur ermittelt werden, wobei aus diesen Abstandssignalen Informationen in codierter Form über die Absolutwerte der Position der Referenzmarken gewonnen werden.

Das erfindungsgemäße Verfahren ist bei translatorischen Meßsystemen anwendbar, insbesondere bei hochauflösenden Meßsystemen für große Längen an Werkzeugmaschinen sowie an Längen- und Koordinatenmeßmaschinen.

### Stand der Technik

Im Werkzeugmaschinenbau und im allgemeinen Maschinenbau werden in großem Umfang Längenmeßsysteme eingesetzt. Dabei sind grundsätzlich zwei Arten von Meßsystemen bekannt, wobei man die eine Art mit dem Begriff "Absolutwert-System" und die andere Art mit dem Begriff "Inkrementalzählsystem" bezeichnet.

Sowohl die Absolutwertsysteme (z.B. CH-A-374 207), wie auch die Inkremental-Systeme (z.B. CH-A-499 091) haben jeweils eine Reihe spezifischer Vor- und Nachteile. Es sind aber auch Meßsysteme bekannt (z.B. DE-A-2 416 212 oder DE-C-3 144 334), die mit spezifischen hybriden Lösungen die Vorteile der beiden erwähnen Meßsystem-Arten vereinen bzw. deren Nachteile vermeiden.

Bei der Längen- und Winkelmeßeinrichtung nach der DE-A-2 416 212 wird ein Teilungsträger mit einer zweiten, zur Inkrementskala parallelen Referenzspur und identischen Referenzmarken verwendet, die auch aus einzelnen Marken zusammengesetzt sein können. Der Absolutwert jeder Referenzmarke bestimmt sich aus dem jeweiligen spezifischen Abstand zu genau einer benachbarten Referenzmarke, wobei diese unterschiedlichen Abstände zwischen den benachbarten Referenzmarken durch die Abtastung der Inkrementspur ermittelt werden. Zu Identifizierung der einzelnen identischen Referenzmarken muß die jeweils zu erfassende sowie eine benachbarte Referenzmarke abgetastet und deren gegenseitiger spezifischer Abstand in Einheiten der Inkrementspur ermittelt und zusammen mit der Meßrichtungsinformation ausgewertet werden. Bei vertretbaren maximalen Abständen der Referenzmarken ist der Informationsgehalt einer so codierten Referenzspur begrenzt. Daraus folgt, daß diese Codierung nicht für beliebig lange Meßsysteme geeignet ist.

In der DE-A-3 617 254 wird ein Meßverfahren beschrieben, bei dem zur Bestimmung des Absolutwertes einer Referenzmarke mindestens zwei Abstände zwischen dieser Referenzmarke und zwei weiteren Referenzmarken ermittelt werden. Dieses vorbekannte Meßverfahren hat den Vorteil, daß ein wesentlich größerer Informationsgehalt in vertretbar kleinen Abständen über die Referenzmarken codiert werden kann. Die eindeutige Decodierung der unterschiedlichen Abstände ist jedoch aufwendig und die auftretende Zeitverzögerung zwischen dem rechentechnischen Bestimmen der zwei Abstände zu dieser Referenzmarke und der Zuordnung der Absolutposition zu dieser gleichen Referenzmarke ist relativ groß und kann die zulässige Verfahrgeschwindigkeit einschränken.

Die DE-A-3 324 004 beschreibt ein Meßverfahren, bei dem analog zur DE-A-2 416 212 die Bestimmung des Absolutwertes einer Referenzmarke mittels der Decodierung des jeweiligen spezifischen Abstandes zu einer benachbarten Referenzmarke erfolgt. Zur Vergrößerung des Codierumfangs wird hier zusätzliche eine weitere parallele Referenzmarkenspur eingeführt, die parallel abgetastet und ausgewertet werden muß.

Allen angeführten Meßverfahren haften jedoch die folgenden Mängel an:

Die Ermittlung des Absolutwertes der jeweils zu erfassenden Referenzmarke müßte zeitgleich mit dem Abtasten der Referenzmarke durch die Abtasteinheit beim Überfahren erfolgen. Für die Decodierung der Abstände und die Bereitstellung der abgespeicherten Absolutwerte in der Auswerteinrichtung ist jedoch eine endliche Zeit erforderlich, insbesondere dann, wenn zur Decodierung Mikrorechner eingesetzt werden sollen. Bei großen Verfahrgeschwindigkeiten wäre die bereitgestellte Absolutposition nicht mehr identisch mit der tatsächlichen Position.

Für Anwendungsfälle, bei denen die Absolutpositionen, die als metrologisches Raster gelten, mit variablen Fehlerkomponenten (wie z.B. Temperaturfehler oder belastungsabhängige Deformationsanteile) mittels Mikrorechnern korrigiert werden sollen, steht keine ausreichende Zeit für diese Korrekturrechnung zur Verfügung.

### Beschreibung der Erfindung

Ziel der Erfindung ist es, den Gebrauchswert eines Längenmeßsystems, das mit einem Mikrorechner arbeitet, durch Erhöhung der Meßsignalverarbeitungsgeschwindigkeit zu verbessern.

Der Erfindung liegt daher die Aufgabe zugrunde, ein Meßverfahren für ein quasi-absolutes inkrementales Längenmeßsystem anzugeben, bei dem ein Teilungsträger mit abstandscodierten Referenzmarken einer Referenzmarkenspur abgestastet wird und das eine ausreichende Zeit zwischen dem Erkennen des Abstandscodes der Referenzmarken und dem Bereitstellen der Absolutposition zur Decodierung und für Korrekturrechnungen gewährleistet.

Diese Aufgabe wird erfindungsgemäß mit einem Verfahren nach Patentanspruch 1 gelöst. Bevorzugt kann dabei der Absolutwert in der Auswerteinrichtung mit einem Korrekturwert ergänzt an die Anzeigeeinheit übergeben werden.

Bei dem erfindungsgemäßen quasi-absoluten inkrementalen Längenmeßverfahren steht die erforderlich Zeit für die Decodierung, für Hilfsoperationen und für die Absolutwertbereitstellung zur Verfügung, die für die relative Verschiebung der Abtasteinrichtung vom Moment der Abtastung der letzten zum abstandscodierten Code gehörenden Referenzmarke an von den zₒ Inkrementen der Zählspur benötigt wird. Je nach der Hard- und/oder Softwareausstattung der Auswerteinrichtung kann der Zählbetrag zₒ bei vorgegebener maximaler Relativbewegung zwischen Teilungsträger und Abtasteinrichtung ohne Schwierigkeit so gewählt werden, daß die erforderliche Zeit für die Decodierung, für Hilfsoperationen und für die Absolutwertbereitstellung zur Verfügung steht.

Der technische Effekt des erfindungsgemäßen Verfahrens besteht vor allem darin, daß bei dem erfindungsgemäßen quasi-absoluten inkrementalen Längenmeßsystem die den Positionen Pₙ der Zählspur zugeordneten Absolutwerte ohne Zeitverzögerung bereitgestellt werden und somit die bereitgestellten Absolutpositionen auch bei großen Verfahrgeschwindigkeit identisch mit den tatsächlichen Positionen sind. Weiterhin sind den absoluten Positionen aktuelle variable Fehlerkomponenten zuordenbar, ohne das dynamische Verhalten des Meßsystems zu beeinflussen.

Aufgrund der erfindungsgemäß zur Verfügung gestellten Zeitspanne zwischen der Codeerkennung und der Bereitstellung der Absolutwerte sind vor allem auch für die Decodierung von Doppelcodes und für zusätzliche Korrekturrechnungen als besonders wirtschaftliche Lösungen Mikrorechner einsetzbar.

### Kurze Beschreibung der Zeichnungen

Die Erfindung wird nachfolgend anhand der Zeichnung im Prinzip beispielshalber noch näher erläutert. Es zeigen:
**Fig. 1** einen bei einem erfindungsgemäßen Verfahren einsetzbaren Teilungsträger mit einer einfach-codierten Referenzspur, und
**Fig. 2** die Anordnung der Abtastelemente in einer Abtasteinrichtung zum Abtasten eines Teilungsträgers nach Fig. 1.

### Ausführliche Beschreibung der Zeichnungen

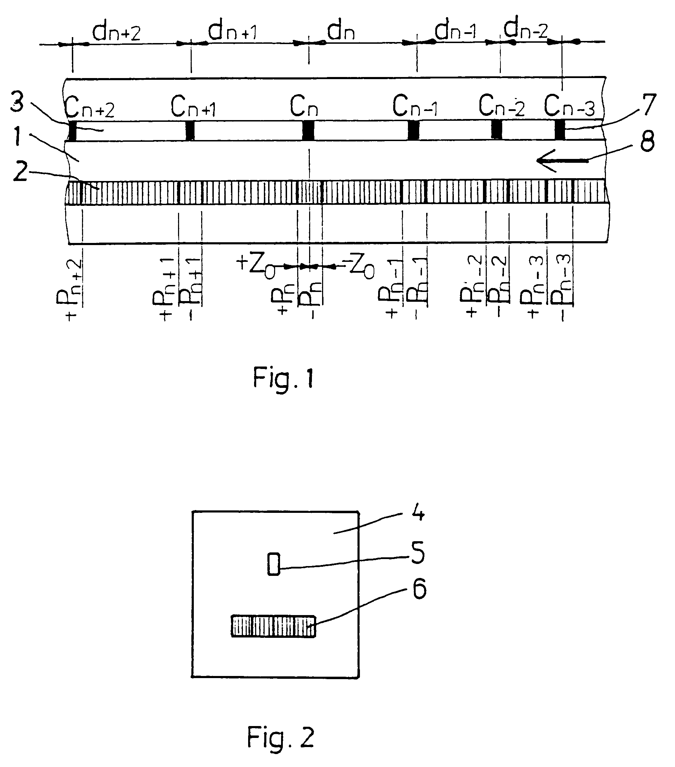

In Fig. 1 ist zu einem quasi-absoluten inkrementalen Längenmeßsystem, mit dem das erfindungsgemäße Verfahren durchgeführt werden kann, nur ein Teilungsträger 1 dargestellt, der aus einem Metall- oder einem Kunststoffband oder aus einem Glaskörper bestehen kann. Ferner ist eine Rasterteilung und eine eine Referenzmarkenspur 3 mit Codemarken 7 abtastende photoelektrische Abtasteinrichtung (in den Figuren nicht dargestellt) vorgesehen, die mit einer Auswerteinrichtung verbunden ist, welche elektrische Absolutwertesignale erzeugt. Die Rasterteilung 2 und die Referenzmarkenspur 3 sind auf dem Teilungsträger 1 angeordnet. Eine in Fig. 2 dargestellte Abtastplatte 4 einer solchen Abtasteinrichtung umfaßt eine Marke 5 zum Abtasten der Referenzmarkenspur 3 und ein Gegengitter 6 mit vier um 90° phasenverschobenen Bereichen zum Abtasten der Rasterteilung 2.

Die in Fig. 1 gezeigte Referenzmarkenspur 3 ist einfach-codiert. Die Information über die Position +Pₙ ist für den Fall der Vorwärtsbewegung in Teilungsrichtung 8 in den Codemarken Cₙ und Cₙ₋₁ bzw. in deren Abstand dₙ enthalten, wobei dieser Abstand anhand der Rasterteilung 2 mittels der von ihr abgeleiteten Zählsignale ermittelt wird.

Für ein ausgewähltes Beispiel sollen folgende Parameter vorgegeben sein:
* Inkrement der Zählspur: 1 »m;
* maximale Relativgeschwindigkeit (Abtastgeschwindigkeit) zwischen Rasterteilung und Abtasteinrichtung: 1 m/sec;
* maximal benötigte Zeit für die Decodierung, für Hilfsoperationen, wie z.B. aktuelle Temperaturkorrekturen der Positionen Pₙ, und für die Absolutwertbereitstellung in der Auswerteinrichtung: 0,5 ms

Aus dem Produkt von maximaler Abtastgeschwindigkeit und der benötigten Zeit für die Absolutwertbereitstellung ergibt sich als Zählbetrag zₒ zu 500 »m.

Der aus der Codierung decodierte Absolutwert wird auf die Position +Pₙ₊₂ der Zählspur bezogen, die um den Zählbetrag zₒ von 500 Inkrementen der Zählspur gegenüber der Stelle der Zählspur versetzt ist, bei welcher die Codemarke Cₙ₊₂ ihren Codeimpuls abgibt. Für den Fall der Rückwärtsbewegung ist die Information über die Position -Pₙ in den Codemarken Cₙ und Cₙ₊₁ bzw. in deren Abstand dₙ₊₁ enthalten. Dabei ist zu beachten, daß zur Information des Codes auch ein Vorzeichen entsprechend einer Vorwärtsbewegung (+) oder einer Rückwärtsbewegung (-) gehört. Der aus der Codierung decodierte Absolutwert wird auf die Position -Pₙ der Zählspur bezogen, die um den Zählbetrag von -500 Inkrementen der Zählspur gegenüber der Stelle der Zählspur versetzt ist, bei welcher die Codemarke Cₙ ihren Codeimpuls abgibt. Vorteilhaft ist es, daß z.B. bei einer Vorwärtsbewegung nach Passieren der Abtasteinrichtung über Cₙ₊₁ und Cₙ₊₂ und nach dem Erfassen des Abstandes dₙ₊₂ anhand der Zählsignale der Rasterteilung 2 diese Information decodiert werden kann, für diese Decodierung und weitere Korrekturrechnungen in einem Prozessor Zeit zur Verfügung steht und der berechnete und korrigierte Absolutwert für +Pₙ₊₂ verfügbar ist, bevor diese Position +Pₙ₊₂ erreicht wird, und daß beim Erreichen dieser Position der Absolutwert sofort für die Anzeigeeinrichtung zur Verfügung steht.
Als Abtasteinrichtung läßt sich jede Einrichtung, die zur Abtastung der Referenzmarkenspur 3 geeignet ist, verwenden. In der Praxis wird jedoch bevorzugt eine auf photoelektrischer Grundlage arbeitende Abtasteinrichtung eingesetzt, die relativ zum Teilungsträger verschiebbar angeordnet ist. Sie umfaßt im allgemeinen eine Lichtquelle zur Beleuchtung der Abtastplatte und der Teilung des Teilungsträgers 1, wobei gegebenenfalls auch noch eine Abbildungsoptik vorgesehen sein kann, mit der die Fenster der Abtastplatte und die Teilungen des Teilungsträgers 1 auf in der Abtasteinrichtung vorhandene photoelektrische Empfänger abgebildet werden können, welche die elektrischen Abtastsignale zur Ermittlung der zu erfassenden Position erzeugen.

## Patentansprüche

1. Verfahren zum Messen von Längen, bei dem ein Teilungsträger (1), der eine Rasterteilung (2) in einer Zählspur und Referenzmarken (7) mit unterschiedlichen Abständen (dₙ₊₂, dₙ₊₁, dₙ, ..., dₙ₋₂), die im codierter Form Informationen über die Absolutwerte der Position der Referenzmarken enthalten, in mindestens einer anderen Spur (3) aufweist, von einer Abtasteinrichtung abgetastet wird, wobei die Abtastsignale in einer Auswerteinrichtung weiterverarbeitet werden, und bei dem die Abstände in Zähleinheiten der Zählspur zwischen den von der Abtasteinrichtung abgetasteten Referenzmarken bestimmt werden, wobei aus diesen Abständen der Absolutwert der Position der Abtasteinrichtung gewonnen wird, **dadurch gekennzeichnet**, daß der Absolutwert der Position der Abtasteinrichtung für eine Position (Pₙ) der Zählspur bestimmt wird, die um einen ganzzahligen Zählbetrag größer gleich eins in Verfahrrichtung (8) gegenüber der Stelle der Zählspur versetzt ist, bei welcher die letzte Referenzmarke (7) abgetastet wurde, daß dieser Absolutwert an dieser Position (Pₙ) der Anzeigeeinheit als aktuelle Position der Abtasteinrichtung übergeben wird, und daß der Versatz der Position (Pₙ) zur Übergabe des in der Auswerteinrichtung decodierten Absolutwertes gegenüber der letzten abgetasteten Referenzmarke anhand der Zählsignale in der Zählspur ermittelt wird.

2. Verfahren nach Anspruch 1, dadurch gekennzeichnet, daß in der Auswerteinrichtung der Absolutwert zur Korrektur der Einflüsse von Parametern wie Temperatur oder belastungsabhängige Deformationen vor der Abgabe an die Anzeigeeinheit mit einem Korrekturwert ergänzt wird.

## Claims

1. A method for measuring lengths, in which a division carrier (1), which has a grid division (2) in a count track and reference mark (7) with different spacings (dₙ₊₂, dₙ₊₁, dₙ, ..., dₙ₋₂) and which contain in coded form information concerning the absolute values of the position of the reference mark, in at least one other track (3), is scanned by a scanning device, the scanning signals being further processed in an evaluating device and in which the spacings are determined in counting units of the count track between the reference marks scanned by the scanning device and at said spacings of the absolute value the position of the scanning device is obtained, characterized in that the position of the scanning device for a position (Pₙ) of the count track is determined, which is displaced by an integral multiple equal to or greater than one in the movement direction (8) with respect to the count track, in which the last reference mark (7) was scanned, that said absolute value at this position (Pₙ) of the indicating unit is transferred as the present position to the scanning device and that determination takes place of displacement of the position (Pₙ) for the transfer of the absolute value decoded in the decoding device with respect to the final scanned reference mark by means of the count signals in the count track.

2. Method according to claim 1, characterized in that in the evaluating device the absolute value for correcting the influences of parameters such as temperature or load-dependent deformations is supplemented by a correction value prior to delivery to the indicating unit.

## Revendications

1. Procédé de mesure de longueurs, dans lequel une règle graduée (1) qui comprend une graduation (2) dans une piste de comptage et dans au moins une autre piste (3) des marques de référence (7) séparées par des distances différentes (dₙ₊₂, dₙ₊₁, dₙ,..., dₙ₋₂), qui contiennent des informations sous forme codée sur les valeurs absolues de la position des marques de référence, piste qui est explorée par un dispositif explorateur, les signaux d'exploration étant traités dans un dispositif d'évaluation, et les distances entre les marques de référence explorées par le dispositif explorateur étant déterminées en unités de comptage de la piste de comptage et la valeur absolue de la position du dispositif explorateur étant obtenue à partir de ces distances, caractérisé en ce que la valeur absolue de la position du dispositif explorateur est déterminée pour une position (Pₙ) de la piste de comptage qui est décalée d'une quantité de comptage en nombres entiers supérieure ou égale à un dans la direction (8) du déplacement par rapport à la position de la piste de comptage, dans laquelle la dernière marque de référence (7) a été explorée, en ce que cette valeur absolue dans cette position (Pₙ) est transmise à l'unité d'affichage sous forme de position actuelle du dispositif explorateur et en ce que le décalage de la position (Pₙ) par rapport à la dernière marque de référence explorée est déterminée au moyen des signaux de comptage dans la piste de comptage en vue du transfert de la valeur absolue décodée dans le dispositif d'évaluation.

2. Procédé selon la revendication 1, caractérisé en ce que la valeur absolue est complétée dans le dispositif d'évaluation par une valeur de correction pour corriger les influences de paramètres tels que la température ou des déformations dépendant de la charge avant la transmission à l'unité d'affichage.
